Europäisches Patentamt

European Patent Office

Office européen des brevets

(19)

(11) Numéro de publication : **0 021 930**
**B1**

(12) **FASCICULE DE BREVET EUROPÉEN**

(45) Date de publication du fascicule du brevet :
16.02.83

(51) Int. Cl.³ : **H 04 N   5/04**, H 04 N   5/44

(21) Numéro de dépôt : **80400814.2**

(22) Date de dépôt : **06.06.80**

(54) **Dispositif de synchronisation d'un circuit générateur de caractères et d'un circuit de balayage vertical et récepteur de télévision comportant un tel dispositif.**

(30) Priorité : **20.06.79 FR 7915804**

(43) Date de publication de la demande :
**07.01.81 Bulletin 81/01**

(45) Mention de la délivrance du brevet :
**16.02.83 Bulletin 83/07**

(84) Etats contractants désignés :
**DE GB IT NL**

(56) Documents cités :
**DE A 1 809 536**
**DE A 2 707 579**
**US A 3 735 038**
**FUNKSCHAU, Vol. 49, No. 18, août 1977, München DE « Farbenempfänger mit Monitorschaltung », page 50**

(73) Titulaire : **THOMSON-CSF**
**173, Boulevard Haussmann**
**F-75379 Paris Cedex 08 (FR)**

(72) Inventeur : **Van den Driessche, Michel**
**"THOMSON-CSF" SCPI 173, Bld Haussmann**
**F-75360 Paris Cedex 08 (FR)**

(74) Mandataire : **de Beaumont, Michel et al**
**THOMSON-CSF SCPI 173, Bld Haussmann**
**F-75379 Paris Cedex 08 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Dispositif de synchronisation d'un circuit générateur de caractères et d'un circuit de balayage vertical et récepteur de télévision comportant un tel dispositif

La présente invention concerne le domaine de la télévision et du téléaffichage, plus particulièrement celui de l'affichage, sur un écran de visualisation ou cathoscope, d'une « étiquette » rapportée et insérée localement dans une image. De façon plus précise, l'invention concerne la synchronisation de l'étiquette avec les balayages vertical et horizontal de l'écran.

Il est fréquent que des informations complémentaires soient rapportées sur un écran de visualisation. Ces informations peuvent être, par exemple — et sans que les cas cités soient limitatifs — l'affichage du canal sélectionné ou de l'heure sur un écran de réception de télévision domestique, ou l'affichage de paramètres sur une console graphique de télé-informatique.

La lisibilité des étiquettes suppose leur bonne stabilité par rapport à l'image, c'est-à-dire une bonne synchronisation du balayage générateur de l'image et du balayage générateur de l'étiquette : c'est une solution à ce problème de synchronisation qu'apporte le dispositif de l'invention.

Pour obtenir la stabilité des étiquettes, le dispositif selon l'invention lie le déclenchement de l'affichage à une intensité dans le bobinage du déviateur du tube cathoscope.

De façon plus précise, l'invention consiste en un dispositif de synchronisation d'un circuit générateur de caractères et d'un circuit de balayage vertical, dans un tube de visualisation, le circuit de balayage comportant notamment un bobinage déviateur, caractérisé en ce que le signal de commande du circuit générateur est asservi au courant traversant le déviateur par l'intermédiaire d'un détecteur de seuil dont une première entrée de mesure reçoit une tension proportionnelle au courant à travers le déviateur et une seconde entrée de référence reçoit une tension de référence, le détecteur de seuil changeant d'état lorsque la tension mesurée atteint la tension de référence, le signal de sortie du détecteur de seuil constituant le signal de synchronisation du circuit générateur.

L'invention sera mieux comprise par la description d'application qui suit, laquelle s'appuie sur les figures qui représentent :

figure 1, un dispositif de synchronisation selon l'art connu ;

figure 2, diagrammes de fonctionnement du dispositif de la Fig. 1 ;

figure 3, diagrammes de déclenchement du dispositif selon l'invention ;

figure 4, schéma électrique du dispositif selon l'invention ;

figure 5, diagrammes de fonctionnement du dispositif selon l'invention.

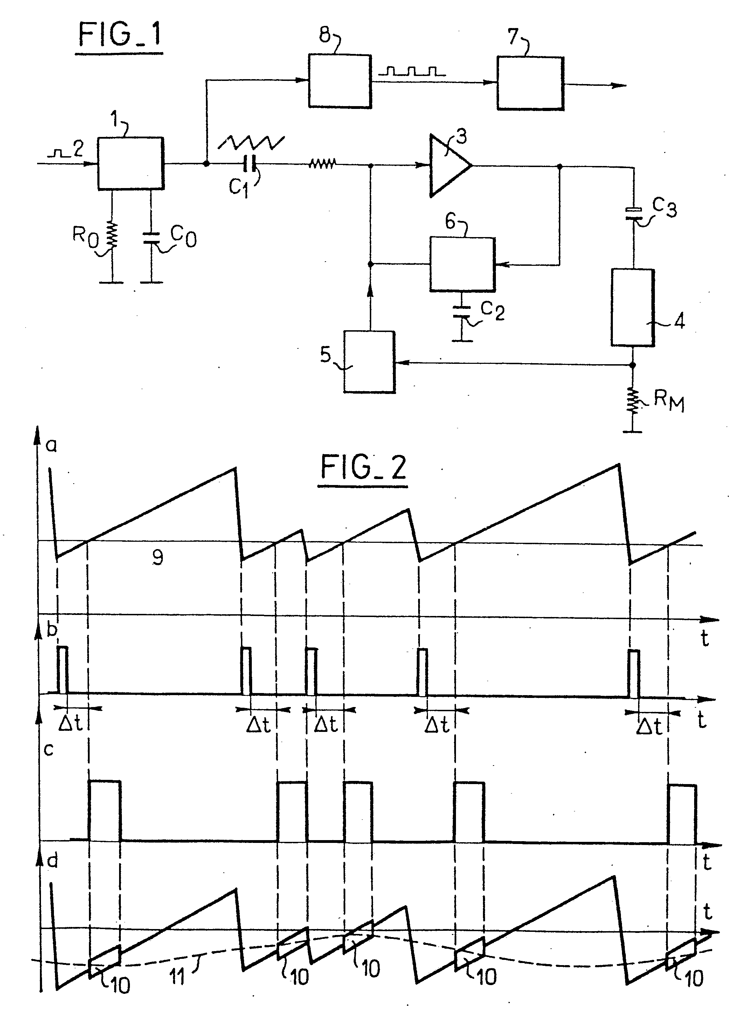

La figure 1 représente un dispositif de synchronisation de balayage selon l'art connu.

Un oscillateur 1, dont la fréquence est commandée par une résistance $R_0$ et un condensateur $C_0$, reçoit sur une entrée 2 les impulsions de synchronisation trame que l'on trouve généralement dans un téléviseur. Cet oscillateur délivre sur sa sortie une tension en dents de scie, laquelle est appliquée, à travers une capacité de liaison $C_1$, sur un amplificateur de puissance 3. Le courant de sortie de l'amplificateur 3 traverse le bloc déviateur 4 du tube cathoscope, à travers une capacité de liaison $C_3$. $R_M$ est une résistance en série avec le déviateur 4 : elle permet de mesurer le courant qui traverse le déviateur, et de l'asservir par la contre-réaction en courant 5. Le schéma classique de balayage vertical en télévision est complété par une contre-réaction en tension 6, laquelle comporte une capacité $C_2$ d'intégration pour éliminer la composante alternative.

Lorsque le récepteur de télévision ou la console de visualisation sont conçus pour afficher une étiquette dans une image de fond, un circuit 7, générateur de textes ou de sigles, est ajouté à ce schéma classique : ce circuit est synchronisé en balayage vertical par un circuit 8 générateur d'impulsions. Ce dernier, connecté sur la sortie de l'oscillateur 1, émet des impulsions brèves synchronisées sur le retour de trame, c'est-à-dire sur le flanc descendant abrupt des dents de scie.

Ainsi, dans les dispositifs connus, l'information transmise aux systèmes numériques qui génèrent les caractères vidéo est censée correspondre à une position du balayage vertical correspondant à la partie de l'écran sur laquelle doit être déclenché l'affichage de l'étiquette. En fait, cette information est prélevée sur la tension de commande de l'amplificateur de puissance 3, et plus précisément sur le flanc descendant des dents de scie ; or, il peut y avoir distorsion entre la tension de commande et le courant qui parcourt réellement le déviateur 4.

En effet, en l'absence d'émission reçue sur l'antenne de réception de télévision, ou de façon plus générale en l'absence de signal d'entrée sur la console de visualisation, le gain des étages d'amplification à haute fréquence et à fréquence intermédiaire est au maximum en raison du contrôle automatique de gain, et le signal présent sur l'entrée 2 de synchronisation de l'oscillateur 1 de balayage vertical est fortement perturbé. Dans ce cas, la dent de scie en sortie de l'oscillateur est de périodicité variable.

Les différentes constantes de temps créées par les trois condensateurs $C_1$, $C_2$ et $C_3$ modifient la valeur moyenne du courant dans le déviateur en fonction des variations de périodicité de la dent de scie de l'oscillateur : à une impulsion de commande du circuit d'affichage 7 correspondra un courant qui pourra être différent entre deux trames consécutives dans le déviateur, d'où une instabilité de l'étiquette affichée sur l'écran.

Il n'est donc pas bon d'utiliser les dents de scie de l'oscillateur sur le retour de balayage vertical pour synchroniser le dispositif d'affichage. Entre ces signaux de commande et le déviateur intervient un ensemble amplificateur, contre-réaction et condensateur dont l'équation de transfert varie avec la période des dents de scie, et l'affichage est instable.

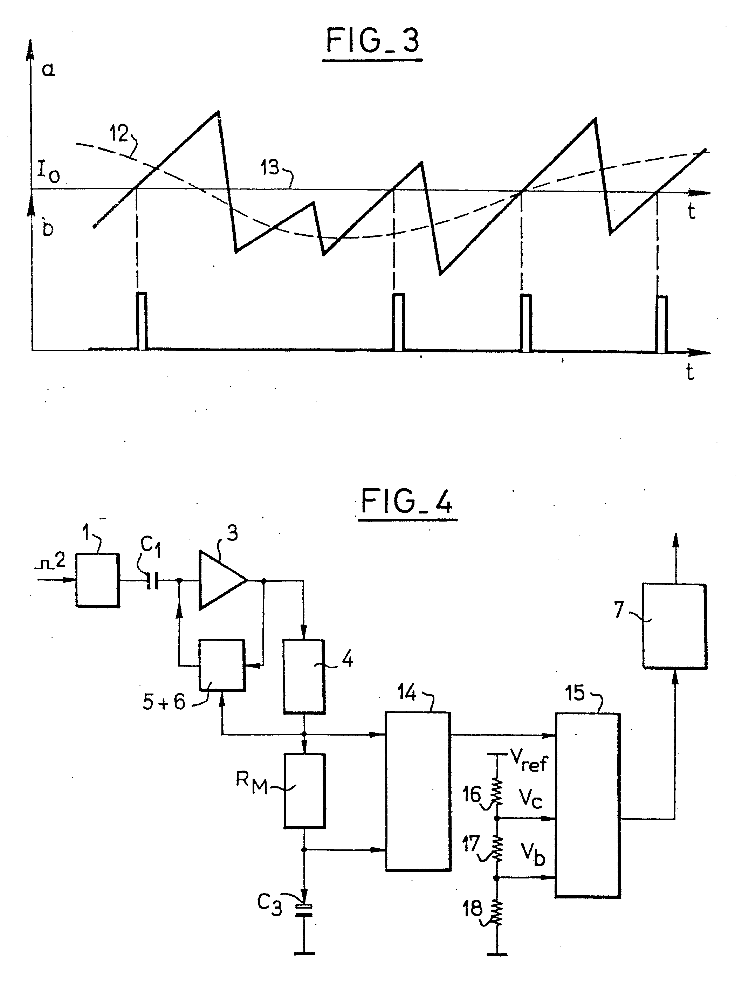

Les diagrammes de la figure 2 illustrent les phénomènes qui viennent d'être décrits.

Tous ces diagrammes ont une même échelle de temps en abscisses.

Le diagramme 2a) représente la tension en dents de scie à la sortie de l'oscillateur 1, dans le cas précisément où des parasites perturbent l'oscillateur, et les dents de scie n'ont pas toutes la même durée — ce qui entraîne d'ailleurs qu'elles n'ont pas toutes la même amplitude, puisque la pente est la même —. Le seuil de déclenchement de l'affichage se fait lorsque le signal en dents de scie atteint le niveau 9.

Le diagramme 2b) représente les impulsions produites à la sortie du générateur 8. Ces impulsions sont synchronisées sur le flanc descendant des dents de scie, c'est-à-dire sur le retour de trame.

Le diagramme 2c) représente les périodes d'affichages qui correspondent à des créneaux produits dans le générateur de caractères 7, par des moyens qui sortent du cadre de l'invention. Il faut seulement noter que tous ces créneaux d'affichage ont un front ascendant synchronisé par rapport aux impulsions produites par le générateur 8, et décalé d'un temps constant $\Delta t$.

Le diagramme 2d) représente le courant dans le déviateur 4. La valeur moyenne 11 du courant d'affichage varie à cause des variations de périodicité de l'oscillateur ; de ce fait, le courant qui traverse le déviateur pendant la période d'affichage n'est jamais le même.

Le dispositif de synchronisation de balayage selon l'invention repose sur un déclenchement d'affichage lié non plus avec le retour du balayage mais au courant qui traverse le déviateur.

La différence est très importante. Les signaux correspondant au temps de retour n'ont pas de rapport direct avec le courant dans le déviateur lorsqu'interviennent des changements de périodicités dus au bruit que l'on a sur le signal de synchronisation. Dans le dispositif selon l'invention, la synchronisation de balayage est déclenchée par le courant dans le déviateur — c'est-à-dire par un état réel — lorsque le courant atteint un seuil prédéterminé. Si des perturbations interviennent, le pire cas est celui où ce seuil ne serait pas atteint : l'affichage de l'étiquette ne serait pas déclenché. En dehors de ce cas, et quelles que soient les perturbations externes, l'affichage est synchronisé avec le niveau du courant dans le déviateur, donc avec la hauteur, sur l'écran : il est parfaitement stable.

Les diagrammes de la figure 3 illustrent ce mode de fonctionnement. Ils ont tous deux la même échelle de temps en abscisse.

Le diagramme 3a) représente le courant qui traverse le déviateur : l'oscillateur de commande est supposé parasité, et la valeur moyenne du courant dans le bobinage du déviateur est représentée par une ligne irrégulière 12. L'invention met en jeu un dispositif qui déclenche l'impulsion de synchronisation chaque fois que le courant dans le déviateur atteint une valeur $I_0$ déterminée. Les points de la dent de scie en courant qui représentent tous la même valeur $I_0$ sont alignés sur une droite 13.

L'invention met donc en jeu une bascule qui change d'état chaque fois que le seuil $I_0$ est atteint.

Le diagramme 3b) représente les impulsions de synchronisation émises par ce détecteur de seuil.

La position du faisceau d'électrons sur l'écran de visualisation étant directement proportionnelle à l'intensité qui traverse le déviateur, l'affichage d'une étiquette sur l'écran est stable, puisque commandé par le courant, même dans le cas où le balayage vertical est perturbé.

Il peut se présenter des cas où la perturbation de balayage vertical est telle qu'une dent de scie n'atteint pas le seuil de courant $I_0$ : c'est ce qui est représenté intentionnellement sur la deuxième dent de scie de la figure 3. Dans la réalité des faits, ce cas n'entraîne pas de conséquences graves. Puisque le seuil $I_0$ n'est pas atteint, il n'y a pas d'impulsion de synchronisation, et l'étiquette n'est pas affichée pendant le temps d'une trame, c'est-à-dire pendant 20 milli-secondes : l'œil humain n'y est pas sensible, et intègre les images perçues pendant les trames précédentes et les trames suivantes.

La figure 4 représente le schéma électrique du dispositif de synchronisation selon l'invention.

Ce schéma comporte une partie classique, très simplifiée parce qu'elle sort du cadre de l'invention, composée d'un oscillateur 1 commandé par une impulsion de synchronisation 2, un amplificateur de puissance 3, un bobinage de déviateur 4 et les contre-réactions en courant et en tension 5 et 6. Le circuit est bouclé sur la masse par l'intermédiaire d'une résistance de mesure $R_M$ et d'un condensateur de liaison $C_3$ — lequel peut également être placé entre l'amplificateur 3 et le déviateur 4 —.

Aux bornes de la résistance de mesure $R_M$ se développe une très faible tension, de l'ordre de 0,5 à 1 volt crête à crête, proportionnelle au courant dans le déviateur. Cette tension est amplifiée par un amplificateur de tension 14, connecté aux deux bornes de la résistance de mesure $R_M$.

Le signal de sortie de l'amplificateur de tension 14 est appliqué sur l'une des bornes d'entrée d'un détecteur de seuil 15, dite entrée de mesure. Les tensions de référence $V_b$ et $V_c$ du détecteur de seuil déterminent le déclenchement de l'impulsion de sortie.

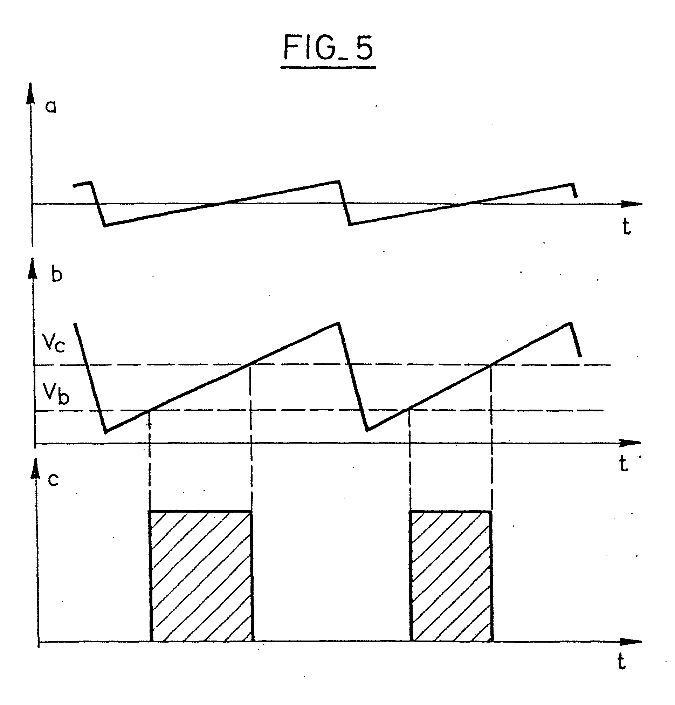

Il est important de préciser — et cela sera montré ultérieurement à l'occasion de la figure 5 — que le détecteur de seuil 15 fonctionne en fait entre deux seuils : le premier seuil, à la tension $V_b$, déclenche le balayage de l'affichage, comme cela a été dit au sujet de la figure 3a) ; le second seuil, à la tension $V_c$, met fin à l'affichage.

Les deux seuils $V_b$ et $V_c$ sont donc réglables, selon la position désirée de l'affichage sur l'écran, puisque la hauteur d'une étiquette sur l'écran est fonction du courant dans le déviateur, et par voie de conséquence des tensions de référence $V_b$ et $V_c$ qui font déclencher la bascule 15 lorsque l'intensité correspondante dans le déviateur est atteinte.

Les signaux de sortie du détecteur de seuil 15 sont appliqués sur l'une des bornes d'entrée du circuit générateur de caractères 7, identique à celui qui, dans l'art connu sur la figure 1, est commandé par les signaux de commande issus de l'oscillateur 1. Le générateur de caractères est donc synchronisé avec le courant réel dans le déviateur.

La figure 5 illustre le fonctionnement du détecteur de seuil 15. Comme les précédents diagrammes, ceux de la figure 5 ont la même échelle de temps en abscisse.

Le diagramme 5a) représente la tension aux bornes de la résistance de mesure $R_M$ : c'est donc celle qui est appliquée à l'entrée de l'amplificateur 14, et c'est une dent de scie de valeur 0,5 à 1 volt crête à crête environ — sans que ceci soit limitatif —.

Le diagramme 5b) représente la tension à la sortie de l'amplificateur 14 : elle reproduit fidèlement la tension d'entrée, amplifiée. Les différentes tensions de référence $V_b$ et $V_c$ sont représentées sur ce diagramme par deux droites parallèles à l'axe des temps. Lorsque la tension de sortie de l'amplificateur 14 atteint la tension de consigne $V_b$, le détecteur de seuil 15 bascule une première fois, et délivre sur sa borne de sortie un signal de synchronisation qui commande le circuit d'affichage 7. Cet état dure jusqu'à ce que la tension de sortie de l'amplificateur 14 ait atteint la tension de consigne $V_c$, qui fait basculer une seconde fois le détecteur de seuil 15, et met fin à l'affichage.

Le diagramme 5c) représente les créneaux de synchronisation issus du détecteur de seuil et appliqués au circuit d'affichage 7. Il est remarquable que, même si, pour une raison quelconque, la période des dents de scie varie, et donc la valeur moyenne change, l'affichage reste stable puisque le début et la fin de la synchronisation, soit la hauteur de l'étiquette sur l'écran, sont liés au courant dans le déviateur, lui-même lié à la déflexion du faisceau d'électrons sur l'écran.

## Revendications

1. Dispositif de synchronisation d'un circuit générateur de caractères (7) et d'un circuit de balayage vertical d'un tube image, le circuit de balayage comportant notamment un bobinage déviateur (4), caractérisé en ce que le signal de commande de synchronisation du circuit générateur (7) est asservi au courant traversant le bobinage déviateur (4) par l'intermédiaire d'un détecteur de seuil (15) dont une première entrée de mesure reçoit une tension proportionnelle au courant à travers le bobinage déviateur (4) et une seconde entrée de référence reçoit une tension de référence, le détecteur de seuil changeant d'état lorsque la tension mesurée atteint la tension de référence, le signal de sortie du détecteur de seuil (15) constituant le signal de synchronisation du circuit générateur (7).

2. Dispositif de synchronisation selon la revendication 1, caractérisé en ce que la tension représentative du courant traversant le bobinage déviateur est mesurée aux bornes d'une résistance de mesure ($R_M$) en série avec le bobinage déviateur (4) et amplifiée par un amplificateur de tension (14).

3. Dispositif de synchronisation selon la revendication 1, caractérisé en ce que le détecteur de seuil (15) reçoit sur ses entrées de référence deux tensions de référence, la première de celles-ci ($V_b$) correspondant à un premier seuil de courant dans le bobinage déviateur (4) et à un premier état du détecteur de seuil (15), fixant le début du balayage synchronisé ; et la seconde tension de référence ($V_c$), correspondant à un second seuil de courant dans le déviateur (4) et à un second état du détecteur de seuil (15), fixant la fin du balayage synchronisé.

4. Dispositif de synchronisation selon les revendications 1 et 3, caractérisé en ce que la position sur l'écran du récepteur de télévision de l'affichage est fixée par le courant traversant le déviateur et indépendante de la fréquence du balayage vertical.

5. Récepteur de télévision caractérisé en ce qu'il comporte au moins un dispositif de synchronisation selon l'une quelconque des revendications 1 à 4.

6. Console de visualisation caractérisée en ce qu'elle comporte au moins un dispositif de synchronisation selon l'une quelconque des revendications 1 à 4.

## Claims

1. A device for synchronizing a sign generating circuit (7) and a vertical scanning circuit of a picture tube, said scanning circuit comprising substantially a deflecting coil (4), characterized in that the control signal for synchronizing the generating circuit (7) is monitored by the current passing through said deflecting coil (4), through the intermediary of a threshold detector (15) a first measuring input of which receives a voltage proportional to the current passing through the deflecting coil (4), while a second reference input receives a reference voltage, said threshold detector changing its state when the measured voltage reaches the value of the reference voltage, the output signal of the threshold detector (15) constituting the synchronisation signal of said generating circuit (7).

2. A synchronizing device according to claim 1, characterized in that the voltage representing the current passing through said deflecting coil is measured at the terminals of a measuring resistor (R_M) connected in series with said deflecting coil (4), and is amplified by a voltage amplifier (14).

3. A synchronizing device according to claim 1, characterized in that said threshold detector (15) receives at its two reference inputs two reference voltages, the first one ($V_b$) of which corresponds to a first threshold value of the current passing through said deflecting coil (4) and to a first state of said threshold detector (15), defining the beginning of the synchronized scanning ; while the second reference voltage ($V_c$) corresponds to a second threshold value of the current passing through the deflecting coil (4) and to a second state of said threshold detector (15), defining the end of the synchronized scanning.

4. A synchronizing device according to claims 1 to 3, characterized in that the position of the display on the television receveir screen is determined by the current passing through said deflecting coil and is independent of the vertical scanning frequency.

5. A television receiver, characterized in that it comprises at least one synchronizing device according to any one of claims 1 to 4.

6. A visualization column, characterized in that it comprises at least one synchronizing device according to any one of claims 1 to 4.

## Ansprüche

1. Vorrichtung zum Synchronisieren eines Zeichenerzeugerkreises (7), und eines Bildröhren-Vertikalabtastkreises, wobei der Abtastkreis insbesondere eine Ablenkwicklung (4) aufweist, dadurch gekennzeichnet, dass das Synchronisierungs-Steuersignal des Erzeugerkreises (7) über einen Schwellenwerdetektor (15) durch den die Ablenkwicklung (4) durchquerenden Strom gesteuert wird, wobei ein erster Messeingang dieses Schwellenwertdetektors eine dem die Ablenkwicklung (4) durchquerenden Strom proportionale Spannung empfängt und eine zweiter Bezugseingang eine Bezugsspannung empfängt, während der Schwellenwertdetektor seinen Zustand ändert, wenn die gemessene Spannung den Wert der Bezugsspannung erreicht, und wobei das Ausgangssignal des Schwellenwertdetektors (15) das Synchronisierungssignal des Erzeugerkreises (7) bildet.

2. Synchronisiervorrichtung nach Anspruch 1, dadurch gekennzeichnet, dass die die Ablenkwicklung durchquerenden Strom darstellende Spannung an den Klemmen eines mit der Ablenkwicklung (4) in Reihenschaltung verbundenen Messwiderstandes ($R_M$) gemessen und vermittels eines Spannungsverstärkers (14) verstärkt wird.

3. Synchronisiervorrichtung nach Anspruch 1, dadurch gekennzeichnet, dass der Schwellenwertdetektor (15) an seinen Bezugseingängen zwei Bezugsspannungen empfängt, deren erste ($V_b$) einem ersten Schwellenwert des die Ablenkwicklung (4) durchquerenden Stromes und einem ersten Zustand des Schwellenwertdetektors (15) entspricht, wodurch der Beginn der synchronisierten Abtastung bestimmt wird, während die zweite Bezugspannung ($V_c$) einem zweiten Schwellenwert des die Ablenkwicklung (4) durchquerenden Stromes und einem zweiten Zustand des Schwellenwertdetektors entspricht, wodurch das Ende der synchronisierten Abtastung bestimmt wird.

4. Synchronisiervorrichtung nach den Ansprüchen 1 bis 3, dadurch gekennzeichnet, dass die Lage der Anzeige auf dem Schirm des Fernsehempfängers durch den die Ablenkwicklung durchquerenden Strom bestimmt wird und von der Vertikalabtastfrequenz unabhängig ist.

5. Fernsehempfänger, dadurch gekennzeichnet, dass er wenigstens eine Synchronisiervorrichtung nach einem der Ansprüche 1 bis 4 aufweist.

6. Bildsäule, dadurch gekennzeichnet, dass sie wenigstens eine Synchronisiervorrichtung nach einem der Ansprüche 1 bis 4 aufweist.

**0 021 930**

FIG_1

FIG_2

# FIG_3

# FIG_4

# FIG_5